# EUROPEAN PATENT SPECIFICATION

(11) **EP 3 995 668 B1**
(45) Date of publication and mention of the grant of the patent: **17.06.2026**
(21) Application number: 21206204.6
(22) Date of filing: 03.11.2021
(51) Int. Cl.: F01D 5/28, B23K 26/356, B23P 6/00, C21D 7/06, C21D 10/00, F01D 5/00

(54) **A METHOD FOR EXTENDING FATIGUE LIFE OF A TURBINE BLADE AFFECTED BY PITTING AND PRODUCT THEREOF**
VERFAHREN ZUR VERLÄNGERUNG DER ERMÜDUNGSLEBENSDAUER EINER VON LOCHFRASS BETROFFENEN TURBINENSCHAUFEL UND ENTSPRECHENDES PRODUKT
PROCÉDÉ PERMETTANT DE PROLONGER LA DURÉE DE VIE D'UNE AUBE DE TURBINE AFFECTÉE PAR PIQÛRE DE CORROSION ET PRODUIT CORRESPONDANT

(30) Priority: 05.11.2020 LU 102198
(43) Date of publication of application: 11.05.2022
(73) Proprietor: Fyzikální ústav AV CR, v.v.i., 18221 Praha 8 (CZ)
(72) Inventor: Brajer, Jan, 25241 Dolni Brezany (CZ); Kaufman, Jan, 25241 Dolni Brezany (CZ); Böhm, Marek, 25241 Dolni Brezany (CZ); Hauschwitz, Petr, 25241 Dolni Brezany (CZ); Strejcius, Josef, 30100 Plzen (CZ); Spirit, Zbynek, 30100 Plzen (CZ)
(74) Representative: Bauer, Karel

(56) References cited:
- EP-A1- 2 520 762
- EP-A2- 0 924 306
- EP-A2- 2 163 727
- WO-A2-2008/130378
- US-A1- 2004 238 509
- US-A1- 2007 107 807

## Description

### Technical field

The present invention relates to a method for treatment of a turbine blade being affected by pitting, thus extending fatigue lifetime of a turbine blade. The method, in one aspect, relates to the treatment by laser shock peening, wherein the treatment is provided on critical spots of the turbine blade.

### Prior art

Laser shock peening (LSP) is a well-known process that uses high-intensity laser pulses to generate deep compressive residual stresses. Standard LSP is performed with laminar water flow over the surface of the component. The surface is also covered with an absorption layer that both absorbs the laser pulse and protects the underlying substrate from heat effects. The absorbent coating local to the laser impingement becomes plasma that is constrained by the component and water layer. A pressure pulse is thus created which propagates as a shock wave deep into the material and generates compressive residual stresses.

Damage of a turbine blade may come from pit corrosion, also known as pitting. Such damage may reduce fatigue strength of the turbine blade, in particular parts affected by pitting are exposed to a greater risk of fatigue crack development. Concentration of stress on the notch created by pitting can accelerate crack growth and thus reduce component life. Further technical problems connected to a damage can be found in EP 2163727.

It is a general technical wish to provide turbine blades able to withstand stresses for long periods of time before replacement. However, due to corrosive environment surrounding the turbine blade, especially during shutdowns, it is practically impossible. Thus, in the high corrosive environment, the turbine blade must be replaced.

EP 2163727 discloses a method of laser shock peening a turbine blade and a product by the process, which is a turbine blade. The method and the blade provide a solution of the above-mentioned problem in terms of durability improvement. The method includes the steps of: applying laser shock peening to a leading edge about a root thereof and applying laser shock peening to the root of the blade about the leading edge thereof. The main drawback of the solution is that the above-mentioned method is applied before the pitting and before introducing the blade into the turbine. Therefore, once the pitting grows on the turbine blade, the blade must be replaced. The document teaches that the laser plastic deformation on the metal surface, thus imparting a layer of residual compressive stress on the surface, is substantially deeper that may be attainable from conventional peening techniques.

A similar technical solution is disclosed in US 2018/0258509 relating to a method and a device for LSP to uniformly strengthen metallic components. The document discloses a LSP method capable to significantly improving surface properties of metal parts. The improvement is achieved due to a compressive residual stress layer with a thickness of more than 1 mm induced by LSP, eliminating the stress concentration and inhibiting the initiation and propagation of a crack, thus improving fatigue of metallic parts and ability to resist corrosion. The main drawback of the solution is that it needs an additional layer to resist the pitting.

A disclosure relating to using different layer embedded into material of blade is also WO 2007/086953. The document discloses a hybrid ablation layer comprising a separate under layer applied to a material to prevent pitting resulting from laser peening. WO2008/130378 , EP0924306, US2007/107807, EP2520762, US2004/238509 disclose laser shock peening used for mitigating effects of damages to a metallic article.

During periodic turbine shutdowns, the surface of the blades is checked by various methods: non-contact optical scanning, eddy currents, ultrasound, replica scanning, etc. Detected defects are analysed and their exact position is determined. Based on the stress analysis and fracture mechanics, the possible risk of fatigue cracking is evaluated. If the defect is determined as critical, a recommendation is issued to replace the damaged blade.

It is an object of the present invention to provide a method for treatment of pitting on already in use or used turbine blades so that the turbine can continue in its normal regime after the treatment and, thus the replacement of the turbine blade nor turbine is not needed. Therefore the fatigue lifetime will be extended.

### Summary of the invention

The present invention relates to a method for extending fatigue life of a turbine blade affected by pitting.

The method comprises the steps of:
- providing a turbine blade having a metallic body including an external surface comprising an area affected by pitting;
- identifying a corrosion pit on the turbine blade considered as a crack initiator;
- applying laser shock peening to the corrosion pit, wherein the laser shock peening is inducing compressive residual stresses to a neighbourhood of the corrosion pit,
   wherein the application of the laser shock peening is by single shot laser beam; wherein
- the applying of laser shock peening comprises at least three single shots per an
   area covering at least part of the corrosion pit, wherein the irradiation areas of the single shot pulses are overlapping, and wherein
- the first and second single shorts are directed to the neighbourhood of the corrosion pit and the third single shot is directed on the centre of the corrosion pit.

In accordance with the present invention, stress distribution caused by corrosion pitting is eliminated by the laser shock peening due to its ability to induce compressive residual stresses which prevent crack initiation. The fatigue crack is thus difficult to propagate and the influence of a notch as a stress concentrator is delayed. In some aspect, the service life of the component can increase almost to the original value corresponding to the service life without the defect.

Detected spots are analysed and their exact position is determined. Based on the stress analysis and fracture mechanics, the possible risk of fatigue cracking is evaluated, thus providing an identification of the spot being considered as a crack initiator. If the defect is marked as critical, i.e. crack initiator, laser shock peening is applied on its neighbourhood. In some embodiment, the whole area affected by pitting can be treated by LSP, i.e. the whole turbine blade will be treated by LSP. In another embodiment, a skilled person may evaluate which part of the area or particular corrosion pit is considered to be critical for crack and failure and such an area will be treated by LSP. The partial treatment can be e.g. a leading edge of the blade, airfoil of the blade or a root of the blade.

The step of application of laser shock peening to the corrosion pit can comprise application of a protective layer on the turbine blade to protect an underlying metallic surface against parasitic heat effects stemming from the laser absorption. A water jet can be delivered on top of the protective layer to form a laminar water flow which significantly enhances generated pressures. A laser pulse can impact the defect location, in some embodiment perpendicular to the part surface. In another preferred embodiment, the laser pulse can be delivered to a surface under particular angle. Before impact, the laser pulse is focused using a convex lens to increase power density in order to generate pressures which exceed the tensile yield strength which is determined by the turbine blade material. More particularly, the lowest threshold for power density is determined by material on which the laser shock peening is applied. In one embodiment, the material used can be steel T552 with tensile yield strength of 960 MPa, thus the lowest power density is 1 GW/cm² which generates about 1 GPa pressure. On the other hand, the highest power density is determined by a surrounding gas environment so that, the laser pulse will not ionize the gas. In an embodiment, wherein the surrounding gas environment is air, the limiting power density is about 10 GW/cm² depending on the laser beam quality. The generated plasma rapidly expands, creating strong shock waves, subjecting the material to plastic deformation and subsequent compressive residual stresses.

The neighbourhood of the corrosion pit can be preferably chosen as a surrounding proximity area of the corrosion pit preventing nucleation and possible crack propagation. The strategy of consolidation (placement of individual spots) will depend on the geometry of the blade and the local mechanical stress. In some example, a laser beam is delivering a spot of square cross section to the turbine blade, wherein the length of an edge of the square can be within the range of 1,5 - 3,5 mm, preferably about 2 mm, and wherein the corrosion pit is approximately of circular cross section having a diameter about 250 µm. In another embodiment. the laser beam of circular cross section can be delivered to the turbine blade focused on the corrosion pit as mentioned above and wherein the circular cross section of the laser beam has about 2 mm in diameter.

The method comprises multiple application of laser shock peening to the corrosion pit by a single shot laser beam. Application of several single shot pulses in laser shock peening regime on the corrosion pit or around it can result in better redistribution of compressive residual stresses.

In a preferred embodiment, the application of multiple single shot pulses in laser shock peening regime is following a pattern. The pattern can be chosen in accordance with crack analysis of corrosion pit and its stress analysis in the neighbourhood. Thus, the laser shock peening follows a pattern that can be in accordance with likelihood of crack of the turbine blade.

The corrosion pit is irradiated by pattern strategy, wherein the pattern strategy comprises overlapping areas of irradiation by single shot. The overlapping pattern strategy provides efficient redistribution of material surrounding the corrosion pit and due to introduction of the compressive residual stress therein, material surrounding the corrosion pit is effectively distributed in the desired direction, preferably to the corrosion pit.

In a preferred embodiment, an optical axis of the laser beam used for the application of laser shock peening is perpendicular to the surface of the blade of the turbine.

In another preferred embodiment, the application of laser shock peening and the related plasma formation is independent on the irradiation angle (up to 70° where 0° is perpendicular irradiation). It is thus especially suitable for application of laser shock peening on a curved surface. The irradiation angle independent plasma formation can thus properly redistribute the compressive residual stresses independent on the curvature of the surface making it suitable to treat hard to reach areas.

In a preferred embodiment, the laser beam causing laser shock peening is a flat top beam. In another embodiment, the beam can have a spatial distribution, such as a Gaussian shaped beam. However, the flat top beam is especially suitable for delivering uniform power density to the protective layer.

In a preferred embodiment, the laser pulse has a length from 1 to 50 ns.

In a preferred embodiment, the laser beam is delivering a peak power density from 1 GW/cm² to 10 GW/cm², more preferably from 2 to 6 GW/cm², more preferably from 4 to 6 GW/cm².

In another preferred embodiment, the laser beam is a single laser pulse with a top-hat beam profile. Top hat beam profile, compared with Gaussian shape beam profile, can deliver maximum energy per pulse per area to the neighbourhood of the corrosion pit. Thus, it can efficiently provide a pressure in a material.

### Brief description of drawings

Fig. 1 schematically represents a turbine blade being treated by the LSP method in accordance with the present invention.
Fig. 2 schematically represents LSP treatment of the turbine blade in accordance with the present invention.
Fig. 3 schematically represents a pattern strategy used in an embodiment of multiple application of LSP treatment.
Fig. 4 schematically represents a pattern strategy used for multiple application of LSP treatment, wherein the areas of irradiation are overlapping.
Fig. 5 schematically represents an embodiment of angle independent LSP treatment.
Fig. 6a and 6b represent drawing, resp. 3D model, of a specimen used for carrying out an example according to the present invention.
Fig. 7 represents a microscopy image of an artificial corrosion pit on the specimen used for carrying out the invention in accordance with the present invention.
Fig. 8 represents a detailed view on the corrosion pit.
Fig. 9 represents a cross section of the spot.
Fig. 10 schematically represents steps of the method according to a preferred embodiment of pattern strategy used for treatment of the specimen.
Fig. 11 represents Wöhler curves of samples with and without introduced defect with and without LSP treatment involved.

### Detailed description

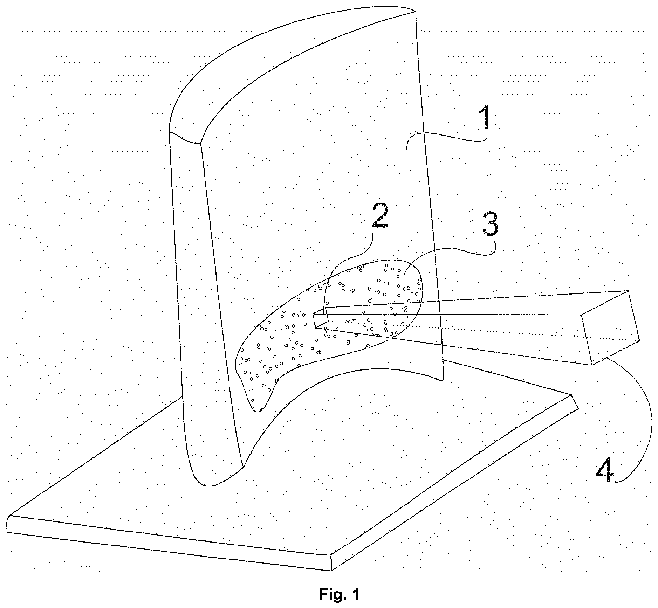

**Fig. 1** schematically represents a turbine blade 1 having an area 3 defected by pitting. A corrosion pit **2** is caused by pitting and may cause serious damages on the blade **1.** The blade can represent a gas turbine blade or a steam turbine blade or high pressure turbine blade suffering by pitting. According to some example, the average lifetime of a turbine blade, when no pitting defects are present, is 50000-100000 hours before it needs to be replaced. However, factors such as poor vapour purity or stopping of the turbine in times of power surplus combined with suboptimal maintenance may lead to development of pitting defects in a matter of days. When the defect spots 2 caused by pitting are identified, the turbine blade should be replaced according to the state of the art methodology, or treated in accordance with the present invention. The treatment comprises applying laser shock peening (LSP) to the corrosion pit 2 as illustratively shown in Fig. 1. The identification can be an optical scanning of the area 3 using a microscope. After identification, the laser beam **4** is focused on the neighbourhood of the corrosion pit **2** and treated by laser shock peening.

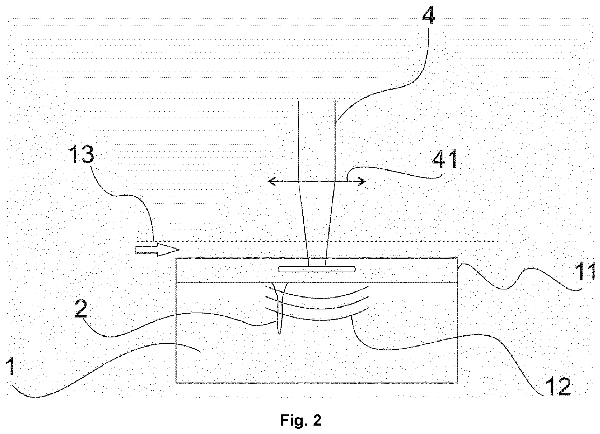

A schematic configuration of an LSP process on a metal turbine blade **1** is shown in **Fig. 2****.** An intense laser beam **4** provides single shot in LSP regime onto a metal surface for a very short period of time, e.g. 10 ns - length of the pulse, the heated zone in a protective layer **11** is vaporised and then is transformed to plasma by ionisation. The plasma continues to absorb the laser energy until the end of the deposition time. The pressure generated by the plasma is transmitted to the material through shock waves **12.** The interaction of the plasma with a metal surface can achieve a plasma pressure of several GPa. In order to obtain a high amplitude of shock pressure, an LSP step normally uses a confined mode, in which the metal surface is usually coated with the protective layer **11** such as polyvinyl tape or black paint or aluminium foil, confined by a transparent material **13** such as distilled water. This type of interaction leads to pressures of up to 1 - 10 GPa on the metal surface. A stronger pressure pulse may enhance the outcome of LSP with a high magnitude of compressive residual stress to a deeper depth. The pressure pulse **4** is focused by a lens **41** to the surface of the turbine blade **1** and sends shockwaves through the material around the corrosion pit **2.**

In accordance with the present invention, LSP is applied directly to the area **3** suffering by pitting, where corrosion pits **2** were identified as a place of crack initiation. No further layer of cladding needs to be used according to the present invention. The area 3 suffering by pitting can be the leading edge of the blade or the trailing edge or tip of the blade. The LSP induces compressive residual stresses so that the neighbourhood of the corrosion pit **2** anywhere on the blade was repaired. Compressive residual stresses are induced in the surrounding material so that the corrosion pit is repaired.

The material of the blades is irrelevant once the material is suffering by pitting and can be treated by LSP. The material of the turbine can be steel, e.g. martensitic stainless steel, or any other alloy based on Ti, Fe, Ni or combinations thereof.

In an embodiment, the laser beam **4** can be a square spot to the surface of the turbine blade **1,** as schematically shown in Fig. **1****.** The length of the edge of the square spot covers the neighbourhood of the corrosion pit **2**. In yet another embodiment, the spot of the laser beam **4** can have a circular shape or any shape capable to cover the neighbourhood of the corrosion pit **2.**

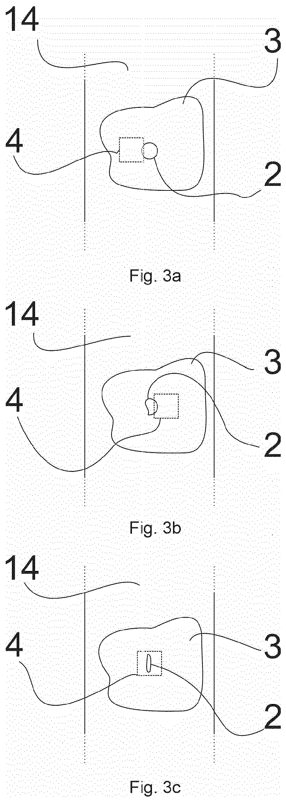

The corrosion pit is treated by several laser single shot pulses **4** inducing compressive residual stress by LSP. The whole area is treated by multiple application of LSP. The plurality of pulses delivered to the surface of the turbine blade **1** causing LSP results in introducing compressive residual stresses in distributed area **3,** thus it more effectively supresses the probability of a crack. **Fig. 3** represents a part **14** of metallic material of the turbine blade **1.** The surface of the turbine blade **1** can be curved. The corrosive pitting is schematically shown by area **3** on the surface of the metallic material. **Fig. 3** further schematically represents a corrosion pit **2** most probably causing the crack of the turbine blade **1.** In a first step, the corrosion pit **2** is identified and is considered to be a crack initiator. A single shot laser beam **4** in LSP regime is used to irradiate the neighbourhood of the corrosion pit **2** on its left side. Thus, compressive residual stress deform the corrosion pit **2** due to its material reconfiguration. The second application of the single shot laser beam **4** in LSP regime is focused on the right side of the neighbourhood of the corrosion pit **2.** Again, the corrosion pit **2** is deformed due to material reconfiguration. For the third time, the single shot beam pulse **4** in LSP regime is focused on the centre of the corrosion pit **2** so that the corrosion pit **2** is repaired and the surface of the turbine blade **1** is integral.

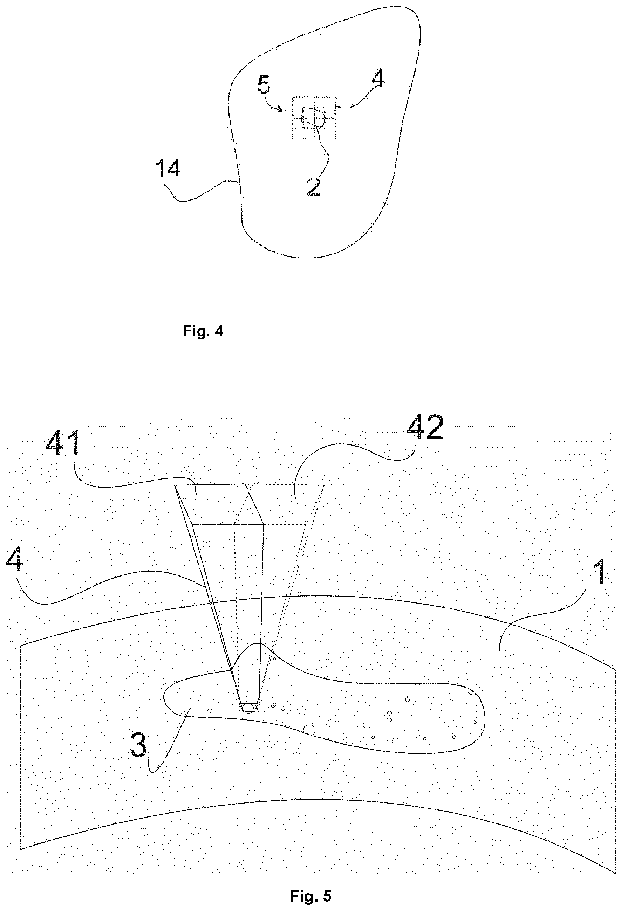

As shown in **Figs. 4****,** the pattern **5** strategy used in the single shot LSP application is overlapping (Fig. **4**). The laser beam **4** can be focused on the neighbourhood of the corrosion pit **2** and the pattern strategy can be chosen so that the introduced compressive residual stress is the most effective for material redistribution. **Fig. 4** schematically represents a part **14** of the turbine blade **1.** The part **14** comprises a corrosion pit **2.** Five single shots in LSP regime are applied to the surrounding neighbourhood so that the compressive residual stress is introduced. The four single shots are not overlapping and focused around the corrosion pit **2.** The last one, the fifth single shot, is focused directly on the corrosion pit **2,** thus the fifth single shot overlaps the preceding four spots. This pattern strategy can provide better redistribution of the material in the neighbourhood of the corrosion pit **2.** The last single shot can heal up the whole surface of the turbine blade **1.** Multiple shots (pattern repetition) increase the depth of generated compressive stresses and can be used here to improve effectiveness of the treatment.

As illustratively shown in Fig. **4****,** a square spot is the most effective to induce the compressive residual stress in the neighbourhood due to its logical overlapping. However, in another embodiment, a skilled person may choose to use a circular spot of the laser beam once the skilled person will introduce sufficient residual stress.

In accordance with the present invention, the pattern **5** strategy can be freely chosen and may copy the geometry of the corrosion pit **2** or geometry of the turbine blade **1.**

In a further preferred embodiment, the application of LSP can be angle dependent as schematically shown in **Fig. 5. Fig. 5** represents a curved surface of the turbine blade 1 comprising an area **3** suffering by pitting. The laser beam **4** having a square spot is introducing compressive residual stress to the material by the laser beam **4** in LSP regime. In a first single laser shot **41,** the beam is directed to the surface at a 20° angle from the plane perpendicular to the tangential plane of the surface. The second single shot pulse **42** is delivered in mirror symmetric geometry. The application of LSP can follow a pattern strategy in accordance with the embodiment above. A particular advantage of this embodiment is Z the capability to treat curved surfaces and to effectively introduce compressive residual stress. This embodiment can result into an angle dependent compressive residual stress. In another embodiment, the angle can be any angle up to 70°.

In a further preferred embodiment, the whole procedure of LSP application, including a plurality of single shots, is repeated. For example, in a first loop, three single shots are used in the pattern strategy according to **Fig. 3**. In a second and third loop, the same pattern strategy is applied. In a particular advantageous embodiment, the pattern **5** in both angle and non-angle dependent irradiation by single laser pulse **5** shots is repeated. The repetition can be following the same pattern strategy or be a combination of pattern strategies. For example, the first loop of the repetition comprises a plurality of LSP single shots applied in accordance with the pattern strategy shown in **Fig. 3****,** wherein the irradiation is angle dependent. In a second loop of the repetition, the pattern strategy can be LSP single shots applied according to **Fig. 4****,** wherein the LSP is not angle dependent. In a third loop, the single shot in LSP regime is focused on the corrosion pit. Thus, it is clear for the person skilled in the art, that the pattern strategy and its angle (in)dependent variant can be freely interchangeable and they are not linked to each other.

In another embodiment, a single laser pulse having a power density of 1 GW/cm², 2 GW/cm², 4 GW/cm² and 10 GW/cm² is compared. Lower power density is more suitable for softer materials with lower tensile yield strength such as aluminium or copper whereas higher power density is more suitable for harder materials such as steel and titanium.

In yet another example, single laser pulses having a pulse length from 1 to 50 ns are compared. Longer pulses in the 20 - 50 ns range are more suitable for deeper compressive residual stresses.

In yet another example, the profile of the pulse beam **4** is compared. Top-hat beams are more suitable for LSP due to their uniform power density distribution in the impacted area and easier overlap with other laser shots.

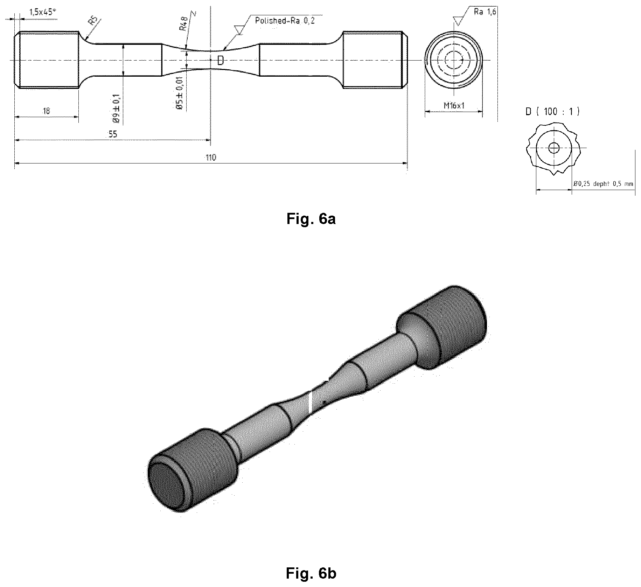

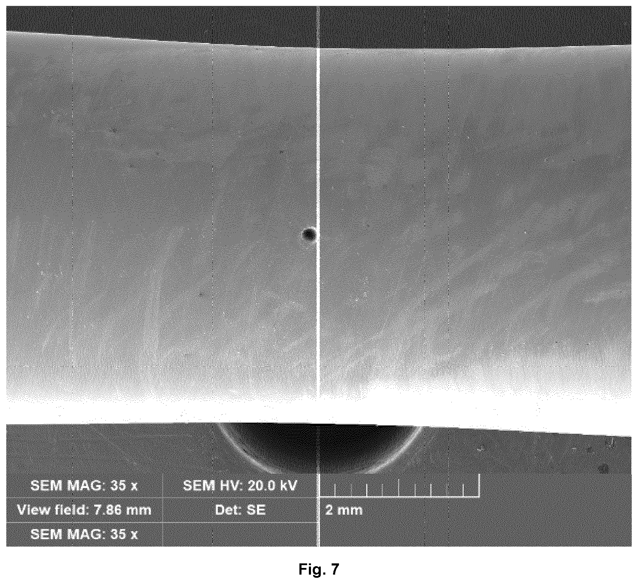

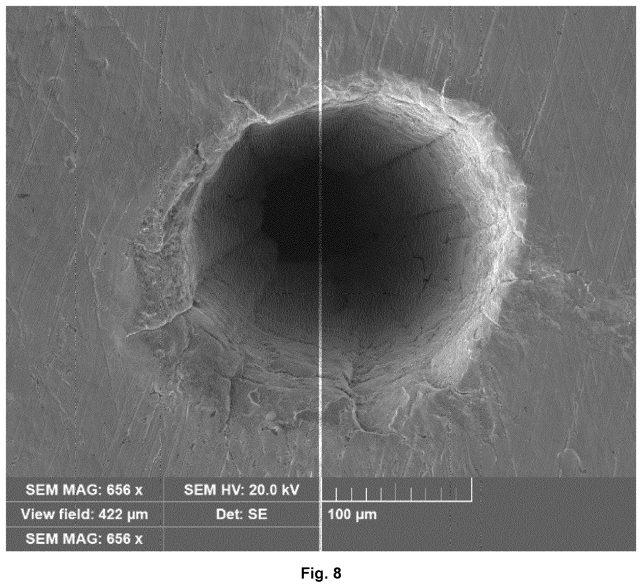

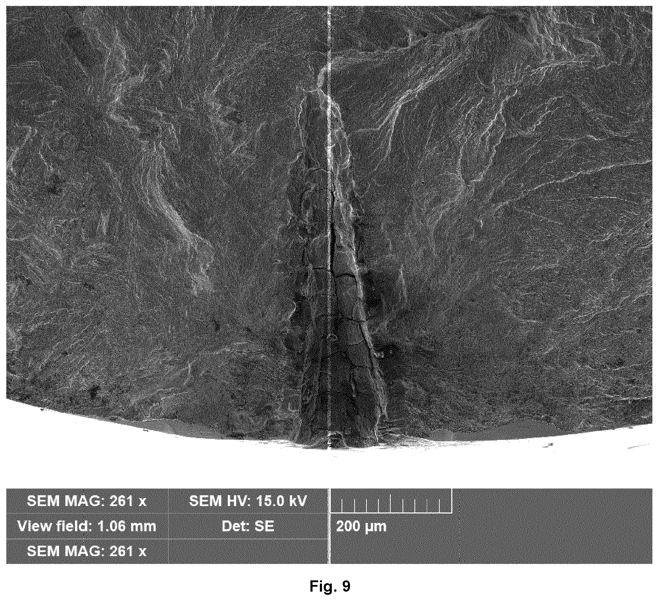

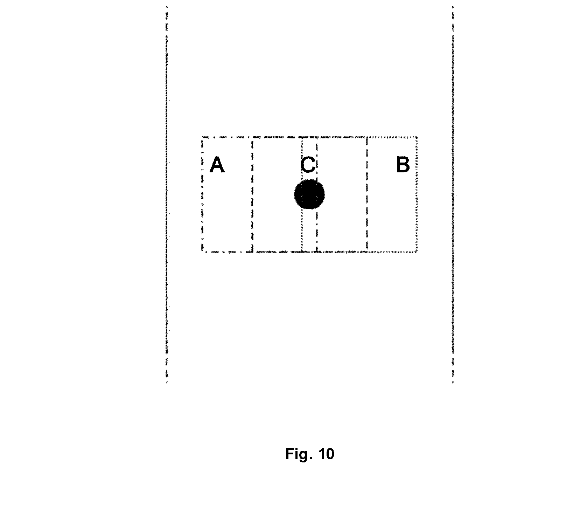

In an example, high cycle fatigue (HCF) tests were performed on martensitic stainless steel made of 12 wt. % Cr, 3 wt. % Ni, 2 wt. % Mo, 0.8 wt. % Mn and 0.12 wt. % C as shown in **Fig. 6a** and **6b****.** The mechanical properties of the tested steel are Yield Strength 960 MPa, Ultimate Tensile Strength 1060 MPa and hardness 315 HB. The specimen type for HCF was hourglass with 5 mm diameter. To simulate a pitting defect in controlled and repeatable conditions, corrosion has been replaced by laser drilling. A small V-shaped (conical) hole 250 µm deep and 460 µm in diameter at the surface was created at the specimen midpoint, perpendicular to its surface. A Q-switched laser with 3 ns pulse duration, energy of 40 µJ, and 500 kHz repetition frequency was used. The laser spot was 39 µm in diameter. In order to achieve the required hole diameter, the laser spot was systematically moved in a spiral-like manner starting at the edges and working its way towards the center. The spot movement speed was 700 mm/s and one hole took 400 cycles (spirals) to complete. During the drilling, the dissipative heat produced by the laser absorption raised the specimen temperature to 1500 °C. Microscopic images of the drilled hole are shown in **Fig. 7****.** A detailed view of the drilled hole and its cross section is shown in **Fig. 8** and **Fig. 9****.** The drilled hole is considered as a defect spot **2.** Specimens were mounted on M-20iA/20M Fanuc robotic arm. The corrosion pit 2 (drilled hole) along with its surrounding area was covered with a black PVC tape 130 µm thick with a steady 1 mm thick laminar water layer on top. Diode Pumped Solis State Laser system Bivoj as described in Pilar J, De Vido M, Divoky M, Mason P D (eds), Characterization of Bivoj/DiPOLE 100: HiLASE 100-J/10-Hz diode pumped solid state laser, SPIE 10511, Solid State Lasers XXVII: Technology and Devices, 105110X (15 February 2018); doi: 10.1117/12.2290290 was used to carry out the laser shock peening. The laser pulses have a square flat-top profile with a rectangular temporal shape. Pulses of energy 4 J, 10 ns duration and 1030 nm wavelength were focused to a square spot with a side of 2 mm. The resultant power density was 10 GW/cm². Specimens were peened in a single-shot regime with three single shots in a pattern strategy in accordance with **Fig. 10**. One layer consists of 3 shots - one shot **C** directly over the hole and 2 shots **A, B** next to, one from each side with a 20° shift. The resultant overlap in the horizontal direction was 56.5%. The tape was replaced between each single shots. After peening, plastic deformation in the treated area was observable using an optical profilometer.

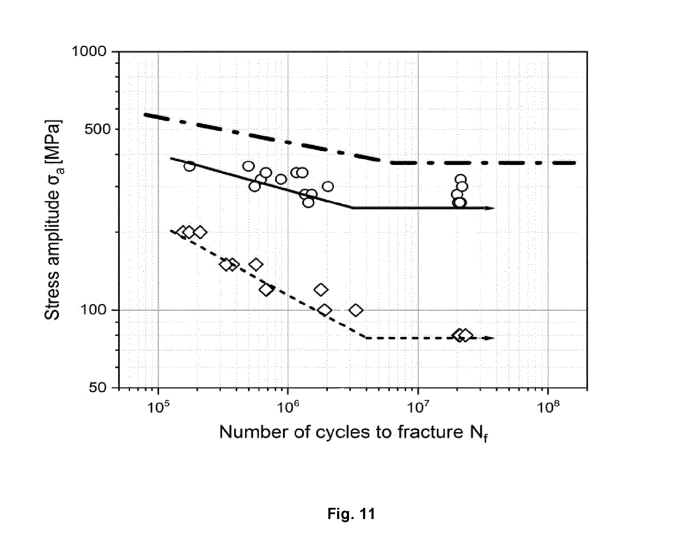

**Fig**. **11** represents an experimental result from the example as described above. Graphs in the **Fig. 11** are a loading amplitude dependent on number of cycles till failure. Line 1 represents a specimen without a drilled hole representing a corrosion pit **2**. Line **3** represents the specimen having the corrosion pit and line **2** represents the specimen being treated by LSP in accordance with the example above. From the experimental result, the line **2** is in close proximity to the line 1 which reflects reparation of the specimen. LSP treated samples with defect showed only a small drop in fatigue lifetime compared to samples without defect. Such an experimental result reflects turbine blade being in tension during rotational movement thereof. The parameters of the mechanical tests were chosen with regard to the real loading of the L-1 low pressure stage steam turbine blade having 200 MW power being affected by pitting. The preload of 300 MPa corresponds to the centrifugal forces acting on the blade during its regular operation. By the regular operation, it is meant an operation of the turbine at speed - which is 50 revolutions per second. Depending on the weight of the blade and the length of the blade, for blades of the penultimate series (L-1) for turbines with an output of 200 - 500 MW, the maximum stress in the blade hinges is calculated to be about 300 MPa.

## Claims

1. A method for extending fatigue life of a turbine blade (1) affected by pitting, the method comprising the steps of:
- providing a turbine blade (1) having a metallic body including an external surface comprising an area affected by pitting;
- identifying a corrosion pit (2) on the turbine blade (1) considered as a crack initiator; and
- applying laser shock peening to the corrosion pit (2), wherein the laser shock peening is inducing compressive residual stresses to a neighbourhood of the corrosion pit (2); and
**characterized in that**:
- the application of the laser shock peening is by single shot laser beam (4);
- the applying of laser shock peening comprises at least three single shots per an area (3) covering at least part (14) of the corrosion pit (2), wherein irradiation areas by the single shot pulses are overlapping, and wherein
- the first and second single shots are directed to the neighbourhood of the corrosion pit (2) and the third single shot is directed on the centre of the corrosion pit (2).

2. The method according to claim 1, wherein the laser shock peening is applied to the neighbourhood of the corrosion pit (2) according to a pattern, wherein the pattern is chosen in accordance with a likelihood of crack of the turbine blade (1).

3. The method according to claim 1 or 2, wherein the applying of the laser shock peening is irradiation angle independent.

4. The method according to anyone of the claims 1 - 3, wherein the step of applying laser shock peening is repeating.

5. The method according to anyone of the preceding claims, wherein the single shot laser beam (4) is delivering a single pulse of flat top profile to the corrosion pit (2).

6. The method according to anyone of the preceding claims, wherein the single shot laser beam (4) pulse has a length from 1 to 50 ns.

7. The method according to anyone of the preceding claims, wherein the single shot laser beam (4) pulse has a peak power from 1 to 10 GW/cm².

8. The method according to anyone of the preceding claims, wherein laser beam (4) is irradiating a square spot (2) having a length of 1,5-3,5 mm.

## Patentansprüche

1. Verfahren zur Verlängerung der Ermüdungslebensdauer einer von Lochfraß betroffenen Turbinenschaufel (1), wobei das Verfahren die folgenden Schritte umfasst:
- Bereitstellen einer Turbinenschaufel (1) mit einem metallischen Körper, der eine Außenfläche umfasst, die einen von Lochfraß betroffenen Bereich aufweist;
- Identifizieren einer Korrosionsvertiefung (2) an der Turbinenschaufel (1), die als Rissinitiator angesehen wird; und
- Anwenden eines Laser-Schockverfestigens auf die Korrosionsvertiefung (2), wobei das Laser-Schockverfestigen Druckeigenspannungen in einem Umfeld der Korrosionsvertiefung (2) induziert; und
**dadurch gekennzeichnet, dass**:
- die Anwendung des Laser-Schockverfestigens mittels eines Einzelschuss-Laserstrahls (4) erfolgt;
- das Anwenden des Laser-Schockverfestigens mindestens drei Einzelschüsse pro Bereich (3) umfasst, der mindestens einen Teil (14) der Korrosionsvertiefung (2) abdeckt, wobei sich die Bestrahlungsbereiche der Einzelschussimpulse überlappen, und wobei
- der erste und der zweite Einzelschuss auf das Umfeld der Korrosionsvertiefung (2) gerichtet sind und der dritte Einzelschuss auf das Zentrum der Korrosionsvertiefung (2) gerichtet ist.

2. Verfahren nach Anspruch 1, wobei das Laser-Schockverfestigen auf das Umfeld der Korrosionsvertiefung (2) gemäß einem Muster angewendet wird, wobei das Muster in Abhängigkeit von einer Risswahrscheinlichkeit der Turbinenschaufel (1) ausgewählt wird.

3. Verfahren nach Anspruch 1 oder 2, wobei das Anwenden des Laser-Schockverfestigens unabhängig vom Bestrahlungswinkel ist.

4. Verfahren nach einem der Ansprüche 1 bis 3, wobei der Schritt des Anwendens des Laser-Schockverfestigens wiederholt wird.

5. Verfahren nach einem der vorhergehenden Ansprüche, wobei der Einzelschuss-Laserstrahl (4) einen einzelnen Impuls mit einem Flat-Top-Profil auf die Korrosionsvertiefung (2) abgibt.

6. Verfahren nach einem der vorhergehenden Ansprüche, wobei der Impuls des Einzelschuss-Laserstrahls (4) eine Dauer von 1 bis 50 ns aufweist.

7. Verfahren nach einem der vorhergehenden Ansprüche, wobei der Impuls des Einzelschuss-Laserstrahls (4) eine Spitzenleistung von 1 bis 10 GW/cm² aufweist.

8. Verfahren nach einem der vorhergehenden Ansprüche, wobei der Laserstrahl (4) einen quadratischen Spot (2) mit einer Länge von 1,5 bis 3,5 mm bestrahlt.

## Revendications

1. Procédé pour prolonger la durée de vie en fatigue d'une aube de turbine (1) affectée par piqûres, le procédé comprenant les étapes consistant à :
- fournir une aube de turbine (1) ayant un corps métallique comprenant une surface externe comportant une zone affectée par piqûres ;
- identifier une piqûre de corrosion (2) sur l'aube de turbine (1), considérée comme une amorce de fissure ; et
- appliquer un grenaillage par choc laser à la piqûre de corrosion (2), le grenaillage par choc laser induisant des contraintes résiduelles de compression dans un voisinage de la piqûre de corrosion (2) ; et
**caractérisé en ce que** :
- l'application du grenaillage par choc laser est effectuée au moyen d'un faisceau laser à tir unique (4) ;
- l'application du grenaillage par choc laser comprend au moins trois tirs uniques par zone (3) couvrant au moins une partie (14) de la piqûre de corrosion (2), les zones d'irradiation par les impulsions à tir unique se chevauchant, et
- les premier et deuxième tirs uniques sont dirigés vers le voisinage de la piqûre de corrosion (2) et le troisième tir unique est dirigé vers le centre de la piqûre de corrosion (2).

2. Procédé selon la revendication 1, dans lequel le grenaillage par choc laser est appliqué au voisinage de la piqûre de corrosion (2) selon un motif, le motif étant choisi en fonction d'une probabilité de fissuration de l'aube de turbine (1).

3. Procédé selon la revendication 1 ou 2, dans lequel l'application du grenaillage par choc laser est indépendante de l'angle d'irradiation.

4. Procédé selon l'une quelconque des revendications 1 à 3, dans lequel l'étape d'application du grenaillage par choc laser est répétée.

5. Procédé selon l'une quelconque des revendications précédentes, dans lequel le faisceau laser à tir unique (4) délivre une impulsion unique présentant un profil à sommet plat à la piqûre de corrosion (2).

6. Procédé selon l'une quelconque des revendications précédentes, dans lequel l'impulsion du faisceau laser à tir unique (4) a une durée de 1 à 50 ns.

7. Procédé selon l'une quelconque des revendications précédentes, dans lequel l'impulsion du faisceau laser à tir unique (4) a une puissance crête de 1 à 10 GW/cm².

8. Procédé selon l'une quelconque des revendications précédentes, dans lequel le faisceau laser (4) irradie un spot carré (2) ayant une longueur de 1,5 à 3,5 mm.
